# EUROPÄISCHE PATENTANMELDUNG

(11) **EP 0 648 980 A1**
(43) Veröffentlichungstag der Anmeldung: **19.04.1995**
(21) Anmeldenummer: 94112567.6
(22) Anmeldetag: 11.08.1994
(51) Int. Cl.: F24D 3/16

(54) **Mobiles, heiz- bzw. kühlbares, vertikales Plattenelement, insbesondere Wandelement**

(30) Priorität: 14.10.1993 CH 3094/93
(71) Anmelder: STRAMAX AKTIENGESELLSCHAFT, CH-8004 Zürich (CH)
(72) Erfinder: Zanotta, Danilo, CH-5630 Muri/AG (CH)
(74) Vertreter: Schmauder, Klaus Dieter

(57) **Zusammenfassung**

Das Plattenelement enthält ein Gehäuse (2) mit Breitwänden (4, 6), die durch Schmalwände verbunden sind und die an der Oberseite durch einen Deckel (10) verschlossen sind. An der Unterseite ist ein Auffangtrog (12) vorhanden. Im Gehäuse ist eine Hauptschicht (14) angeordnet. Auf mindestens einer Seite des Plattenelementes ist zwischen der Hauptschicht (10) und der Breitwand (4) ein Leitungssystem (16) vorhanden, das über einen Zulauf (18) und einen Ablauf (20) mit einer ortsfesten Vorlauf- und einer Rücklaufleitung verbindbar ist. Dadurch wird ein im Aufbau einfaches und in der Anwendung sehr mobiles heiz- bzw. kühlbares Plattenelement geschaffen, das fabrikmässig kostengünstig herstellbar und vielseitig einsetzbar ist.

## Beschreibung

Die Erfindung betrifft ein mobiles, heiz- bzw. kühlbares, vertikales Plattenelement, insbesondere Wandelement.

Es sind bereits heiz- und kühlbare Bauelemente in grosser Zahl bekannt, so beispielsweise für Decken, Böden und auch Wände, wobei es sich jedoch um feste Installationen handelt. Solche festen Installationen sind sehr aufwendig und damit teuer und lassen sich nicht in jedem Falle überall installieren.

Aufgabe der Erfindung ist es, ein mobiles heiz- bzw. kühlbares, vertikales Plattenelement zu schaffen, das einfach in der Herstellung ist und beliebig aufgestellt werden kann.

Die Aufgabe wird erfindungsgemäss gelöst durch ein mobiles heiz- bzw. kühlbares, vertikales Plattenelement mit den Merkmalen des Anspruches 1.

Dadurch, dass ein solches heiz- bzw. kühlbares, vertikales Plattenelement mobil ausgestaltet ist, lässt es sich fabrikmässig auf einfache und kostengünstige Weise herstellen und an jedem beliebigen Ort einsetzen, so dass sich die ortsbedingten Installationen auf ein Minimum reduzieren lassen und sich auf die Anordnung einer Vorlauf- und einer Rücklaufleitung beschränken können, an die das mobile heiz- bzw. kühlbare Plattenelement anschliessbar ist.

Vorteilhafte Ausgestaltungen des Plattenelementes sind in den Ansprüchen 2 bis 14 beschrieben.

Insbesondere wenn das mobile heiz- bzw. kühlbare Plattenelement häufig zur Kühlung verwendet wird, ist eine Ausgestaltung nach Anspruch 2 und vorzugsweise in der Weiterbildung nach Anspruch 3 von Vorteil, um genügend Raum für Kondenswasser zu schaffen, so dass durch das Kondenswasser die übrigen Teile des Plattenelementes nicht beeinflusst werden.

Die Hauptschicht kann gemäss Anspruch 4 isolierend ausgebildet sein, was insbesondere dann von Vorteil ist, wenn auf einer Seite des Plattenelementes andere Bedingungen gewünscht werden als auf der anderen Seite, so dass beispielsweise die Heizung oder Kühlung nur auf einer Seite wirksam ist.

Vorteilhaft ist auch eine Ausgestaltung nach Anspruch 5, so dass die Hauptschicht als Speicherelement über längere Zeit heizend oder kühlend wirken kann, was insbesondere dann von Vorteil ist, wenn das zentrale Energiesystem zur Heizung oder Kühlung intermittierend betrieben wird.

Das Plattenelement kann einseitig heizen bzw. kühlen, vorteilhafter ist jedoch eine Ausgestaltung nach Anspruch 6, so dass beispielsweise bei der Ausbildung und Verwendung des Plattenelementes als Wandelement, zum Beispiel als Raumteiler, auf beiden Seiten des Wandelementes die gleichen Klimabedingungen gegeben sind.

Ein besonders wirkungsvolles Plattenelement ist gemäss Anspruch 7 ausgebildet, so dass neben einer Strahlung auch eine Konvektion durch die Lochungen wirksam wird. In bestimmten Fällen kann auch die Ausbildung des Plattenelementes nach Anspruch 8 zweckmässig sein. Besonders vorteilhaft ist eine Weiterbildung nach Anspruch 9, wobei die versetzten Lochungen einerseits verhindern, dass mechanische Mittel ins Innere des Plattenelementes eindringen und eine Beschädigung oder Zerstörung des Leitungssystems bewirken können. Andererseits wird durch diese Anordnung die Konvektion sowie das Abführen von Kondensat verbessert.

Zur Wirksamkeit des Plattenelementes trägt die Ausgestaltung nach Anspruch 10 bei, wobei dann die Wärmeübertragung zwischen dem Leitungssystem und der Breitwand verbessert wird. Besonders vorteilhaft ist eine Ausgestaltung des Plattenelementes nach Anspruch 11, da eine Kapillarrohrmatte eine sehr gedrungene Bauweise ermöglicht und eine grosse Flächendeckung gestattet, so dass über den ganzen Flächenbereich eine intensive Heizung bzw. Kühlung möglich ist.

Das Plattenelement kann über fest angeordnete Schlauchleitungen mit einer Vorlauf- und einer Rücklaufleitung verbunden sein. Bevorzugt ist eine Ausgestaltung nach Anspruch 12, wodurch das An- und Abkuppeln eines Plattenelementes an eine Vor- und Rücklaufleitung vereinfacht wird und sich die Mobilität des Plattenelementes erhöht, da es im Bedarfsfall schnell an einen neuen Ort umgestellt und an ein Energiesystem angeschlossen werden kann.

Das Plattenelement kann besonders vorteilhaft gemäss Anspruch 13 als Stellwand ausgebildet sein und beispielsweise zur Unterteilung von Grossräumen dienen. Gemäss Anspruch 14 ist aber auch eine Verwendung des Plattenelementes möglich, das nach Art eines Bildes an einer Wand aufgehängt werden kann und hierzu an der Frontseite noch mit einer zwei oder dreidimensionalen Musterung versehen ist.

Ausführungsbeispiele des Gegenstandes der Erfindung werden nachfolgend anhand schematischer Zeichnungen näher beschrieben, dabei zeigen:
- Figur 1: ein Wandelement im Vertikalschnitt quer zur Breitwand;
- Figur 2: den Eckbereich eines Wandelementes der Figur 1 in Ansicht auf die Breitseite, teilweise geschnitten und in grösserem Massstab;
- Figur 3: einen horizontalen Querschnitt durch eine Breitwand im Ausschnitt und in grösserem Massstab;
- Figur 4: den Anschlussbereich eines Wandelementes im Ausschnitt und im Vertikalschnitt, und
- Figur 5: ein Plattenelement im Querschnitt und im Ausschnitt.

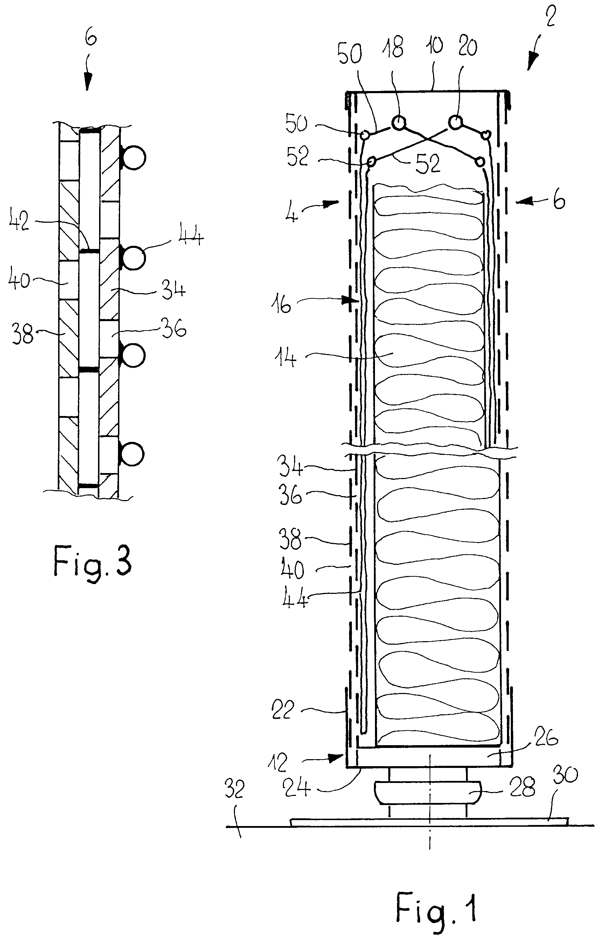

Die Figuren 1 bis 4 zeigen ein als Wandelement ausgebildetes Plattenelement, das ein Gehäuse 2 aufweist, welches zwei Breitwände 4,6 und zwei Schmalwände 8 besitzt, auf der Oberseite mit einem Deckel 10 verschlossen ist und an der Unterseite einen Auffangtrog 12 für Kondenswasser aufweist, der mit einer nicht dargestellten absperrbaren Ablassvorrichtung für das Kondensat versehen sein kann. Im Inneren des Gehäuses ist eine Hauptschicht 14 aus isolierendem oder wärmespeicherndem Material angeordnet, wobei zwischen der Hauptschicht 14 und einer Breitwand 4 ein Leitungssystem 16 für einen Wärmeträger vorhanden ist. Ein solches Leitungssystem 16 kann ausschliesslich auf einer Seite des Wandelementes vorhanden sein, wie dies in der unteren Hälfte der Figur 1 dargestellt ist oder auf beiden Seiten wie in der oberen Hälfte der Figur 1 gezeigt ist. Das Leitungssystem 16 ist mit einem Zulauf 18 und einem Ablauf 20 zum Anschluss an nicht näher dargestellte ortsfeste Vor- und Rücklaufleitungen ausgestattet.

Der Auffangtrog 12 des Gehäuses 2 weist die Breitwände 4,6 und die Schmalwände 8 übergreifende Wandteile 22 und einen Boden 24 auf. Auf letzterem sind Distanzstücke 26 angeordnet, um mindestens die Hauptschicht 14 mit Abstand vom Boden zu halten und somit Freiraum für Kondensat zu schaffen. An der Unterseite des Bodens 24 sind über Drehvorrichtungen 28 Fusselemente 30 angeordnet, um das Wandelement standsicher auf einer Unterlage 32 absetzten zu können.

Wie insbesondere aus den Figuren 1 und 3 hervorgeht, sind die Breitwände 4 bzw. 6 aus einer inneren Platte 24 mit Löchern 36 und einer äusseren Platte 38 mit Löchern 40 gebildet. Die Platten sind so angeordnet, dass sie einerseits über Distanzstücke 42 auf Abstand gehalten sind und andererseits die Löcher 36, 40 derart versetzt sind, dass ein freier Durchtritt von der Aussenseite bis ins Innere des Wandelementes verunmöglicht ist. Die Platten 34, 38 bestehen vorzugsweise aus Metall, wobei das Leitungssystem 16 an der inneren Platte 34 befestigt ist.

Das Leitungssystem 16 besteht vorzugsweise aus einer Kapillarrohrmatte, wie sie beispielsweise aus der DE-OS 31 24 048 bekannt ist. Eine solche Kapillarrohrmatte kann aus einer Vielzahl nebeneinander angeordneter Rohrschlaufen 44 gebildet sein, deren Enden jeweils mit einer Sammelleitung 46,48 verbunden sind, die ihrerseits über Leitungen 50,52 an den Zulauf 18 und den Ablauf 20 angeschlossen sind. Die Kapillarrohrmatte bzw. die Rohrschlaufen ist bzw. sind mittels mechanischer Mittel oder durch Verkleben mit der Platte 34 verbunden, wobei letzteres zur Verbesserung der Energieübertragung bevorzugt ist.

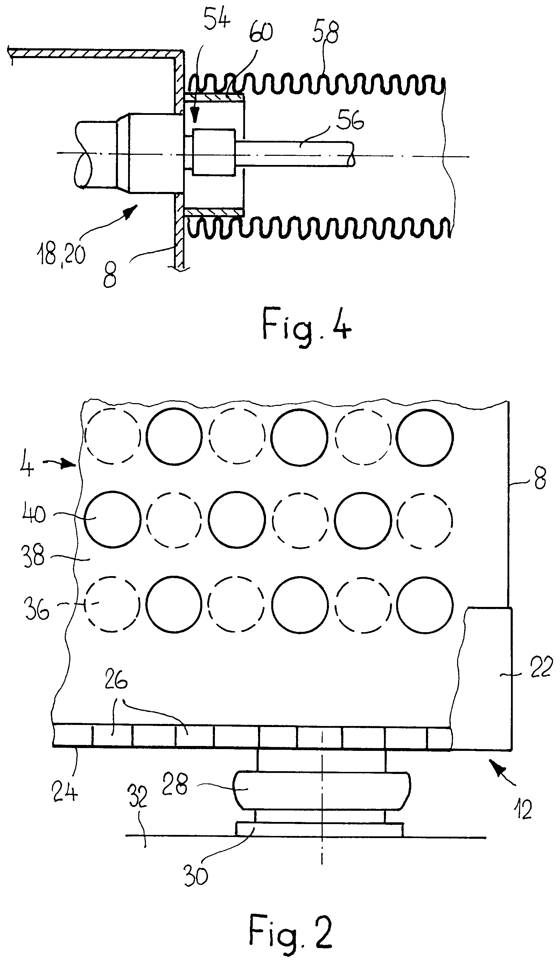

Wie aus Figur 4 hervorgeht, können der Zulauf 18 und der Ablauf 20 Teile einer Steckkupplung 54 aufweisen. Dadurch ist es beispielsweise möglich, einen flexiblen Schlauch 56 anzuschliessen, der vorzugsweise mit einem Schutzrohr 58 versehen ist, welches an einem Rohrstutzen 60 am Wandelement aufsteckbar ist. Mittels eines solchen Schlauches 56 und des Schutzrohres 58 kann das Wandelement mit dem nicht näher dargestellten Vor- und Rücklauf eines ortsfesten Energiesystems verbunden werden.

Ein solches Wandelement kann sehr verschiedene Grössen aufweisen, wobei beispielsweise eine Grösse von Länge x Höhe gleich 160 x 160 oder 180 x 180 cm bevorzugt ist.

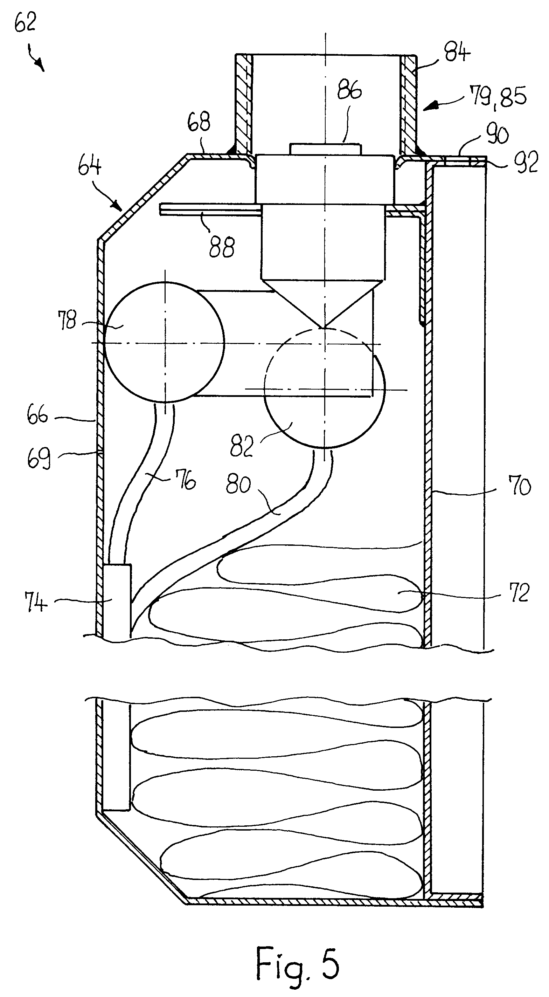

Die Figur 5 zeigt ein weiteres Ausführungsbeispiel eines Plattenelementes, das zum Anhängen an eine Wand ausgebildet ist. Das Plattenelement enthält wiederum ein Gehäuse 62, das beispielsweise aus einem schalenartigen Vorderteil 64 mit der vorne liegenden Breitwand 66 und den Schmalwänden 68 gebildet ist. Zur Verbesserung des Wärmeüberganges und/oder zur Schalldämmung kann die Breitwand 66 des Gehäuses mit einer nicht näher dargestellten Absorbtionsbeschichtung versehen und/oder perforiert sein, wobei pro cm² beispielsweise 1 bis 10 Löcher 69 mit einem Durchmesser von 1 bis 6 mm angeordnet sind. Die Rückseite wird durch eine eingesetzte und eingeschweisste Rückwand 70 gebildet. Im Gehäuse 62 ist eine Hauptschicht 72 angeordnet, die beispielsweise aus isolierender Steinwolle besteht. Zwischen der Hauptschicht 72 und der Breitwand 66 ist ein Leitungssystem 74 angeordnet, das analog jenem des Ausführungsbeispieles der Figuren 1 bis 4 ausgebildet ist. Das Leitungssystem 74 besteht vorzugsweise aus einer Kapillarrohrmatte, die über eine Leitung 76 mit einer Sammelleitung 78 und weiter mit einem Zulauf 79 verbunden ist. Eine weitere Leitung 80 verbindet das Leitungssystem mit einer Sammelleitung 82 und mit einem Ablauf 83. Der Zulauf 79 und der Ablauf 83 sind beispielsweise an der oberen Schmalwand 68 des Gehäuses 62 angeordnet und enthalten jeweils einen Anschlußstutzen 84. Im Anschlußstutzen 84 ist eine Anschlusskupplung 86 angeordnet, die sich an einem Tragbügel 88 abstützt, der an der Rückwand 70 befestigt ist.

Das untere Ende des Gehäuses 62 kann wiederum analog dem Ausführungsbeispiel der Figuren 1 bis 4 in nicht näher dargestellter Weise als Auffangtrog für Kondensat ausgebildet sein.

Wie erwähnt, ist das in Figur 5 gezeigte Plattenelement zum Aufhängen an einer Wand geeignet. Hierzu weist es Aufhängemittel 90 auf, die beispielsweise in Form eines Loches 90 im Doppelflansch 92 gebildet sind, welcher durch die in den Vorderteil 64 des Gehäuses 62 eingesetzte Rückwand 70 gebildet ist. Das Plattenelement kann dekorativ und/oder informativ gestaltet sein, wobei die Breitwand mit einer entsprechenden zwei- oder dreidimensionalen Musterung versehen sein kann. Ein solches Plattenelement kann die verschiedensten Grössen aufweisen, so beispielsweise eine Länge von 3000 mm, eine Höhe von 1500 mm und eine Dicke von 65 mm.

In den Ausführungsbeispielen der Figuren 1 bis 5 wird ein etwaiges Kondensat vorzugsweise durch Verdampfen oder Verdunsten durch die Lochungen im Gehäuse abgeführt. Es ist aber auch möglich, am unteren Ende des Gehäuses, vorzugsweise an einem etwaigen Auffangtrog in nicht näher dargestellter Weise einen absperrbaren Ablass oder eine feste oder ankuppelbare Ablasleitung anzuordnen.

Die Bauteile: Kapillarrohrmatte, Steckkupplungen, flexible Schlauchleitung, flexibles Schutzrohr und dergleichen sind mehrfach bekannte Bauelemente, so dass auf eine nähere Beschreibung dieser Bauteile verzichtet werden kann.

### BEZUGSZEICHENLISTE

- 2: Gehäuse
- 4: Breitwand
- 6: Breitwand
- 8: Schmalwand
- 10: Deckel
- 12: Auffangtrog
- 14: Hauptschicht
- 16: Leitungssystem
- 18: Zulauf
- 20: Ablauf
- 22: Wandteil
- 24: Boden
- 26: Distanzstücke
- 28: Drehvorrichtung
- 30: Fusselement
- 32: Unterlage
- 34: Platte
- 36: Loch
- 38: Platte
- 40: Loch
- 42: Distanzstück
- 44: Rohrschlaufe
- 46: Sammelleitung
- 48: Sammelleitung
- 50: Leitung
- 52: Leitung
- 54: Steckkupplung
- 56: Schlauch
- 58: Schutzrohr
- 60: Rohrstutzen
- 62: Gehäuse
- 64: Vorderteil
- 66: Breitwand
- 68: Schmalwand
- 69: Loch
- 70: Rückwand
- 72: Hauptschicht
- 74: Leitungssystem
- 76: Leitung
- 78: Sammelleitung
- 79: Zulauf
- 80: Leitung
- 82: Sammelleitung
- 84: Anschlußstutzen
- 85: Ablauf
- 86: Anschlusskupplung
- 88: Tragbügel
- 90: Loch
- 92: Doppelflansch

## Patentansprüche

1. Mobiles, heiz- bzw. kühlbares vertikales Plattenelement, insbesondere Wandelement, dadurch gekennzeichnet, dass es ein Gehäuse (2,62) aufweist, das eine Hauptschicht (14,72) und mindestens ein einer Breitwand (6,66) zugeordnetes Leitungssystem (16,74) für ein Energieträgermedium enthält, wobei das Leitungssystem (16,74) einen Zulauf (18,79) und einen Ablauf (20,85) aufweist, die lösbar mit einer Vorlauf- und einer Rücklaufleitung verbindbar sind.

2. Plattenelement nach Anspruch 1, dadurch gekennzeichnet, dass das Gehäuse (2,62) am unteren Ende einen Auffangtrog (12) aufweist.

3. Plattenelement nach Anspruch 2, dadurch gekennzeichnet, dass die Hauptschicht (14) mittels Distanzstücke (26) auf Abstand vom Boden (24) des Auffangtroges (12) gehalten ist.

4. Plattenelement nach einem der Ansprüche 1 bis 3, dadurch gekennzeichnet, dass die Hauptschicht (14,72) isolierend ausgebildet ist.

5. Plattenelement nach einem der Ansprüche 1 bis 4, dadurch gekennzeichnet, dass die Hauptschicht (14,72) als Wärmespeicher ausgebildet ist.

6. Plattenelement nach einem der Ansprüche 1 bis 5, dadurch gekennzeichnet, dass es ferner ein der anderen Breitwand (4,6) zugeordnetes Leitungssystem (16) für ein Energieträgermedium aufweist.

7. Plattenelement nach einem der Ansprüche 1 bis 6, dadurch gekennzeichnet, dass die dem Leitungssystem (16,74) zugeordnete Breitwand (4,6,66) mindestens eine gelochte Platte (34), vorzugsweise aus Metall, aufweist.

8. Plattenelement nach Anspruch 7, dadurch gekennzeichnet, dass die Locher (69) einen Durchmesser von ... mm aufweisen und vorzugsweise in einer Dichte von ... Löchern pro cm² angeordnet sind.

9. Plattenelement nach Anspruch 7 oder 8, dadurch gekennzeichnet, dass der ersten Platte (34) und mit Abstand von dieser eine zweite gelochte Platte (38) zugeordnet ist, deren Löcher (40) bezüglich der Löcher (36) der ersten Platte (34) versetzt angeordnet sind.

10. Plattenelement nach einem der Ansprüche 1 bis 9, dadurch gekennzeichnet, dass das Leitungssystem (16,74) an der Breitwand (4,6,66) befestigt ist.

11. Plattenelement nach einem der Ansprüche 1 bis 10, dadurch gekennzeichnet, dass das Leitungssystem (16,74) als Kapillarrohrmatte ausgebildet ist.

12. Plattenelement nach einem der Ansprüche 1 bis 11, dadurch gekennzeichnet, dass der Zulauf (18,79) und der Ablauf (20,85) Elemente einer Steckkupplung (54,86) aufweisen.

13. Plattenelement nach einem der Ansprüche 1 bis 12, dadurch gekennzeichnet, dass es als Stellwand ausgebildet ist und am unteren Ende vorzugsweise ein- und ausschwenkbare Fusselemente (30) aufweist.

14. Plattenelement nach einem der Ansprüche 1 bis 12, dadurch gekennzeichnet, dass es Aufhängemittel (90) zum Aufhängen nach Art eines Bildes aufweist.
